# EUROPEAN PATENT APPLICATION

(11) **EP 1 465 098 A1**
(43) Date of publication of application: **06.10.2004**
(21) Application number: 04075836.9
(22) Date of filing: 15.03.2004
(51) Int. Cl.: G06F 17/60

(54) **A system for implementing a merger of at least two organizations and a method of implementing a merger of at least two organizations**

(30) Priority: 14.03.2003 US 455087 P; 30.01.2004 US 769473
(71) Applicant: SAP AG, 69190 Walldorf (DE)
(72) Inventor: Schwerin-Wenzel, Sven, 69234 Dielheim (DE); Wood, Eric, Menlo Park CA 94025 (US); Kol, Nir, Sunnyvale CA 94087 (US); Moore, Dennis B., Palo Alto CA 94304 (US)
(74) Representative: Winckels, Johannes Hubertus F.

(57) **Abstract**

A system for implementing a merger of at least two organizations comprising: an interface for a user to edit information related to one or more stakeholders of at least one of the organizations, the interface comprising information for initiative management, the system comprising at least one of an initiative portfolio, an initiative plan, and an initiative report. The invention also relates to a method of implementing a merger of at least two organizations.

## Description

### TECHNICAL FIELD

The invention relates to a system for implementing a merger of at least two organizations and a method of implementing a merger of at least two organizations.

### BACKGROUND

During a restructuring, such as in a merger and acquisition, enterprises can undergo many changes. If executed effectively, these changes help an enterprise to achieve one or more goals. To realize those goals in a restructuring environment, members associated with the changed enterprise are involved in restructuring decisions and discussions. Consequently, an enterprise should carefully plan and manage strategy involving organizations and/or members during the restructuring process.

### SUMMARY OF THE INVENTION

The present application describes systems, methods and software for enterprise restructuring, such as mergers & acquisitions (M&As), for one or more organizations.

In an aspect, the invention features a system for implementing a merger of at least two organizations comprising: an interface for a user to edit information related to one or more stakeholders of at least one of the organizations, the interface comprising information for initiative management, the system comprising at least one of an initiative portfolio, an initiative plan, and an initiative report.

In a preferred embodiment, the system further comprises at least one of an organizational strategy tool, a strategy management tool, a strategy risk management tool, a strategy portfolio management tool, a strategy planning tool, and one or more software tools presenting a user with at least one of a personalized object, a preferred object, a recently accessed object, and a merger-related object.

In a preferred embodiment, the organizational strategy tool comprises an interface for communicating with one or more stakeholders to present a strategic fit, a cultural fit and a financial fit of one or more deal candidates. In a further embodiment, the system comprises a module for planning a merger of at least two organizations, the module comprising at least one of a strategy planner tool, a deal management tool, and an initiative management tool, the module further comprising a help or reference indicator in an interface for a merger of one or more organizations, and at least one of a risk management tool, an analysis management tool, and a portfolio management tool.

According to a second aspect of the present invention, there is provided a method of implementing a merger of at least two organizations comprising: providing an interface for a user to edit information related to one or more stakeholders of at least one of the organizations, providing the interface with information for initiative management, the method comprising providing at least one uf an initiative portfolio, an initiative plan, and an initiative report.

According to a third aspect of the present invention, there is provided a user terminal comprising means operable to perform any of the methods of the second aspect of the present invention.

According to a fourth aspect of the present invention, there is provided a program storage device readable by a processing apparatus, the device embodying a program of instructions executable by the processor to perform the steps of any of the methods of the second aspect of the present invention.

### DESCRIPTION OF DRAWINGS

These and other aspects will now be described in detail with reference to the following drawings.

FIG. 1 is a block diagram of a system.

FIG. 2 is a flow diagram.

FIG. 3 is a block diagram of an architecture.

FIG. 4 is a block diagram of a platform.

FIGS. 5-23 illustrate exemplary interfaces.

Like reference symbols in the various drawings indicate like elements.

### DETAILED DESCRIPTION

The systems and techniques described here relate to software for organizations in an organizations restructuring, such as in a merger and acquisition (M&A) environment. In particular, the software described herein can aid in a realization of synergy, a planning of merger strategy, and a management of merger deals and initiatives during a merger process.

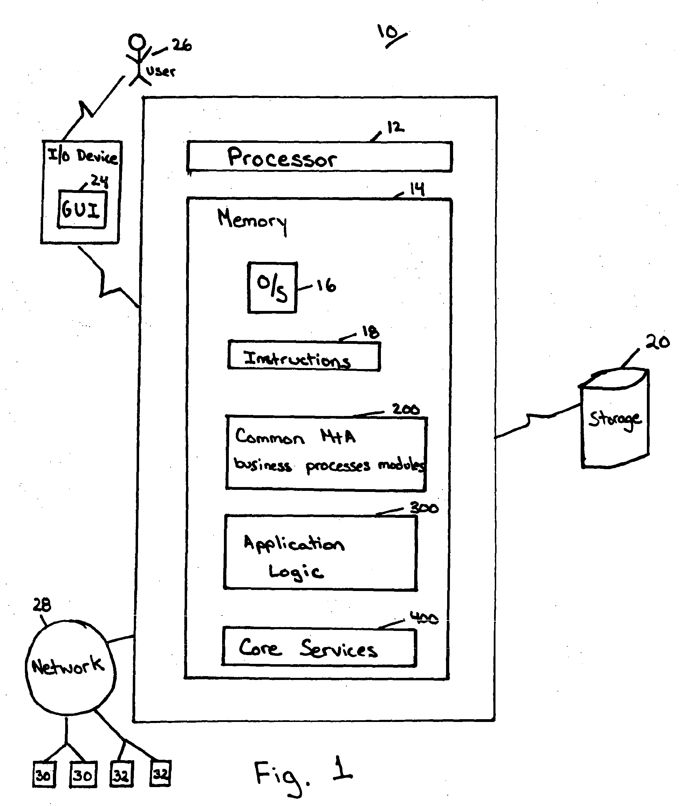

As shown in FIG. 1, a system 10 includes a processor 12 and a memory 14. Memory 14 includes an operating system 16, and instructions 18, that when executed by the processor 12, perform an exemplary restructuring integration process 100, described below. A specific restructuring process, referred to as a merger and acquisition (M&A), will be used as an example throughout this description. However, the process 100 can be applied to most corporate change or restructuring activities, such as spin-offs, department mergers and splits, and so forth. Memory 14 also includes common restructuring business processes modules 200, application logic 300, and a core framework of services 400 that support the restructuring integration process 100. The system 10 includes a link to a storage device 20 and an input/output device 22. The input/output device 22 can include a graphical user interface (GUI) 24 for display to a user 26.

The system 10 includes a link to a network 28. Network 28 links the system 10 to other systems 30 within a single entity and to systems 32 in one or more other entities. Systems 30, 32, generally referred to as clients or source systems, access data through a portal 34. Systems 10, 30, 32 are designed to act as a single logical physically distributed information system representing multiple enterprise information systems of organizations residing in the systems 30, 32. Information is exchanged between the system 10 and systems 30, 32 through the portal 34 and through user interfaces (UIs) of an architecture, described below.

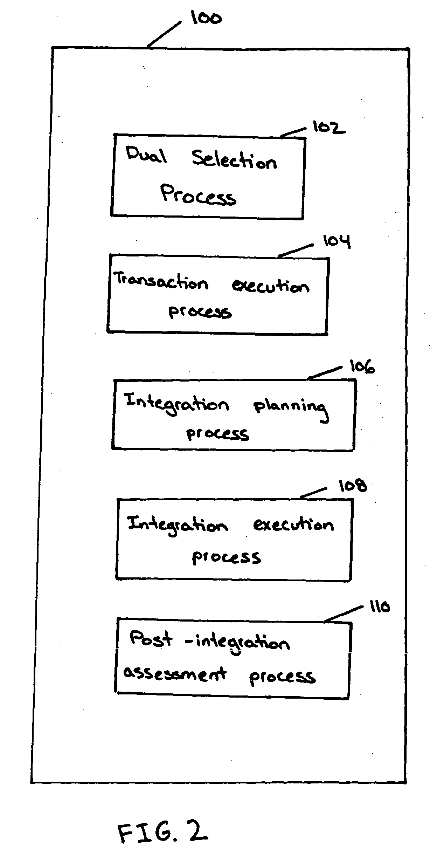

As shown in FIG. 2, the restructuring integration process 100 includes a deal selection process 102. The deal selection process 102 defines acquisition objectives and strategies. The deal selection process 102 searches for the best fit target company to meet a set of objectives and manages detailed due diligence on the target company. The deal selection process 102 also identifies synergies, risks and a realization plan for acquiring the target company.

A transaction execution process 104 structures an acquisition in terms of type, tax implications, legal issues and so forth. The transaction execution process 104 closes an acquisition deal and provides for a rollback in the event the acquisition deal fails.

An integration planning process 106 provides a plan for short term and long term tasks of acquisition integration and communicates goals and decisions to all stakeholders.

The restructuring integration process 100 includes an integration execution process 108. The integration execution process 108 manages an integration project and it sub-projects, designs a new organization, and minimizes disruptions to customers by rolling out combined field organizations quickly. The integration execution process 108 manages the integration of information technology (IT), human resources (HR), financials and procurement. The integration execution process 108 provides for the retention of key employees, manages field organization integration, and identifies cross-selling opportunities and rolls the opportunities out. The integration execution process 108 manages stakeholders, tracks an acquisition, and reports issues and successes.

The restructuring integration process 100 includes a post-integration assessment process 110. The post-integration assessment process 110 measures achieved synergies against targets, accesses where improvements can be made in synergy estimation and/or in integration execution, and applies history to a next transaction.

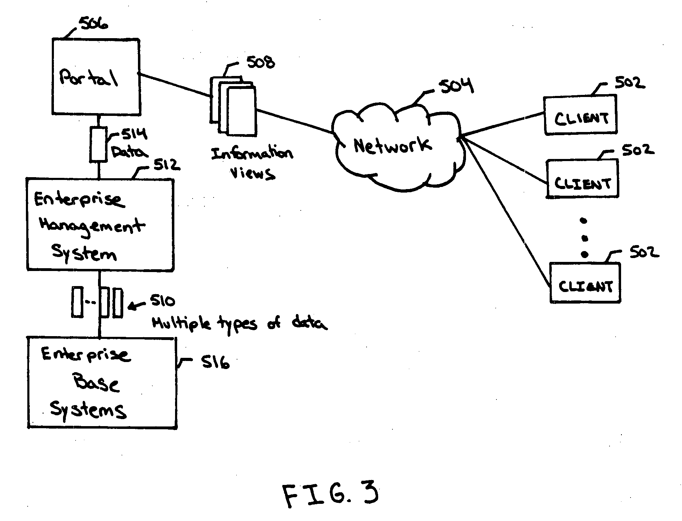

As shown in FIG. 3, the restructuring integration process 100, common restructuring business processes modules 200, application logic 300, and core framework of services 400 are designed to conform to an architecture 1500 designed to a platform 600 that represents a single logical physically distributed information system representing multiple enterprise information systems of organizations. The architecture 1500 / platform 600 insure consistency of data exchange between system 10 and source systems 30, 32, and a separation of source systems 30, 32, when appropriate during phases of the restructuring integration process 100.

The single logical physically distributed information system architecture 1500 representing multiple enterprise information systems of organizations includes multiple clients 502 accessing data over a network 504 through a portal 506. In one embodiment, the clients 502 are processes and/or web browsers that are coupled to the network 504 through a proxy server (not shown).

The portal 506 provides a common interface to program management services through user interface (UI) components 1508. The portal 506 receives requests from the clients 502 and generates information views (iViews) 1510, such as web pages, in response. In embodiments, the portal 506 implements a user roles-based system to personalize a common interface and the iViews 1510 for a user of one of the clients 502. The user can have one or more associated roles that allow personalized tailoring of a presented interface through the iViews 1510.

The portal 506 communicates with an enterprise management system 512 that consolidates multiple application services.

The portal 506 receives data 514 from the system 512 to fulfill the requests of the clients 502. The system 512 provides integrated application services to manage business objects and processes in a business enterprise. The business objects and processes include resources such as personnel, development projects, business programs, inventories, clients, accounts, business products, business services and so forth.

The system 512 communicates with enterprise base systems 516 to obtain multiple types of enterprise base system data 518. The base systems 516 include application services, such as human resource management systems, customer relationship management services, financial management systems, project management systems, knowledge management systems, business warehouse systems, time management systems, electronic file systems and mail systems. In embodiments, the enterprise base systems 516 include a single integration tool, such as eXchange from SAP AG of Germany, which provides an additional level of integration among the enterprise base systems 516. The enterprise management system 512 consolidates and integrates data and functionality of the enterprise base systems 516 into the single management tool.

The single management tool includes systems and methods to facilitate generation of new applications within the enterprise management system 512. The new applications, generally referred to as cross-functional or composite applications, draw on resources of the enterprise base systems 516 to cross over traditional application boundaries and handle new business scenarios in a flexible and dynamic manner.

A virtual business cycle can be generated using such composite applications, where executive level business strategy can feed management level operational planning, which in turn can feed employee level execution, which can feed management level evaluation, which can feed executive level enterprise strategy. Information generated in each of these stages in an enterprise management cycle can be consolidated and presented by the enterprise management system 512 using the customized cross-functional applications. The stages provide and consume determined services that are integrated across multiple disparate platforms.

The portal 506, enterprise management system 512 and enterprise base systems 516 can reside on one or more programmable machines, which communicate over the network 504 or one or more communication busses. In embodiments, the base systems 516 reside in multiple servers connected to the network 504, and the portal 506 and enterprise management system 512 reside in a server connected to a public network (not shown). Thus, the architecture 1500 can include customized, web-based, cross-functional applications, and a user can access and manage enterprise programs and resources using these customized web-based, cross-functional applications from anywhere that access to the public network is available.

A user interface (UI) provides UI patterns used to link new objects and workflow together and generate standardized views into results generated by one or more cross-functional applications.

An object modeling tool enables generation of new business objects in a persistency/repository layer by providing a mechanism to extend a data object model dynamically according to the needs of an enterprise.

A process modeling tool enables generation of new business workflow and ad hoc collaborative workflow. The process modeling tool includes procedure templates with pre-configured work procedures that reflect best practices of achieving a work objective. A work procedure can include contributions from several individuals, generation of multiple deliverables, and milestones/phases. Whenever an instantiated business object or work procedure has a lifetime and status, a progress and status of the object or work procedure is trackable by a process owner or by involved contributors using a "dashboard" that displays highly aggregated data. The dashboard and a "myOngoingWork place" can be two UI patterns that are provided by the UI components 1508.

Whenever there is a concept of "myObjects," "myRecentObjects," "myRelatedObjects" or "myPreferredObjects," then an object picker UI pattern, provided by the UI components 1508, is included that lets users pick their favorite object directly. Whenever people are to be searched, either for choosing one individual person or for generating a collection of people meeting some criterion, a "People Finder" concept can be applied. A key aspect of searching for a person is described as an attribute within the user's activity, qualification, interest, and collaboration profile. For a given cross-functional application, people collections can be stored as personal or shared collections using the People Finder to make them available for further operations later on.

Whenever there is a strategic view on a cross-functional application scenario, analytics of the overall portfolio can be made available in the form of a collection of the UI components 1508. A view selector is used to display/hide components, and a component can be toggled between graphical and numerical display and include a drop-down list or menu to select sub-categories or different views.

Cross-functional application scenarios provide related information to the user when possible, and some parts within a larger cross-functional application define what kind of related information is to be offered. Heuristics can be used to identify such relatedness, such as follows: (1) information that is related to the user due to explicit collaborative relationships, such as team/project membership or community membership; (2) information that is similar to a given business object in a semantic space based on text retrieval and extraction techniques; (3) recent objects/procedures of a user; (4) other people doing the same or similar activity (using the same object or procedure template, having the same work set); (5) instances of the same object class; (6) next abstract or next detailed class; (7) explicit relationships on the organizational or project structure; (8) proximity on the time scale; (9) information about the underlying business context; and/or (10) information about the people involved in a collaborative process.

Cross-functional applications also can include generic functionality in the form of "Control Center Pages" that represent generic personal resources for each user. These cross-functional applications can refer to the following pages, where appropriate: (1) A "MyOngoingWork" page that provides instant access to all dashboards that let users track their ongoing work. Ongoing work refers to the state of business objects as well as guided procedures. (2) A "MyDay" page that lists today's time based events that are assigned or related to the user. (3) "MyMessageCenter" page that displays all pushed messages and work triggers using a universal inbox paradigm with user selected categorical filters. (4) "MyInfo" that provides access to all personal information collections (documents, business objects, contacts) including those located in shared folders of teams and communities of which the user is a member. MyInfo can also provide targeted search in collaborative information spaces such as team rooms, department home pages, project resource pages, community sites, and/or personal guru pages.

The object modeling tool, process modeling tool and user interfaces are used to build components of cross-functional applications to implement new enterprise management functions without requiring detail coding development by a system architect or programmer.

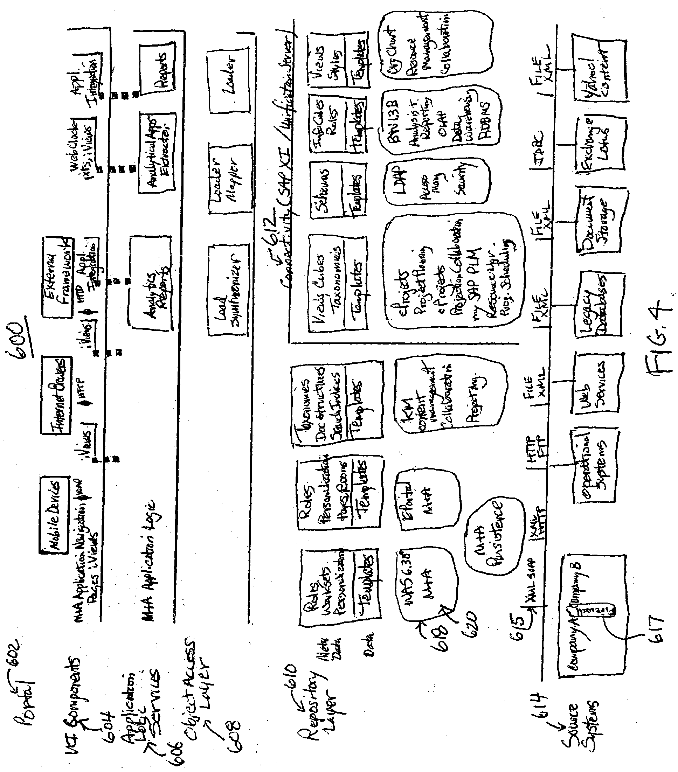

As shown in FIG. 4, a platform 600 that supports the architecture 1500 includes a portal 602, user interface (UI) components 604 and application services logic 606. The platform 600 includes an object access layer 608, a persistence/repository layer 610, connectivity layer 612, and source systems 614. In embodiments, the architecture includes software and components from SAP AG of Germany, as well as special corporate restructuring modules.

Graphical user interfaces (GUIs) provide interaction between a user and the UI components 604 through the portal 602. The UI components 604 interact with the application services logic 606. The application services logic 606 interact with databases and repositories in the persistence/repository layer 610. The user requests information via a GUI through the portal 602. The application services logic 606 processes the user request, retrieves the appropriate requested information from the databases and repositories in the persistence/repository layer 610, and sends the requested information to GUI for display to the user.

The databases and repositories in the persistence/repository layer 610 can contain metadata. Metadata refers to data that describes other data, such as data pertaining to roles, work sets and personalization information, for example. The metadata can interact with the object access layer 608, connectivity layer 612 and application services logic 606. The metadata can also interact with templates 616. The templates 616 provide a format or organization of information according to preset conditions. The templates 616 can interface with Web application server (WAS) processes 618 and core merger processes 620 in the repository layer 610.

In embodiments, the databases and repositories in the persistence/repository layer 610 interact with the source systems 614 through base system connectors 615 using a markup language such as extensible markup language (XML), web services such as Simple Object Access Protocol (SOAP), request for comments (RPC), or Transmission Control Protocol/Internet Protocol (TCP/IP). The source systems of one organization can interact with the source systems of another organization through a firewall 617.

The base system connectors 615 can include a enterprise connector (BC) interface, Internet communication manager/Internet communications framework (ICM/ICF), an encapsulated postscript (EPS) interface and/or other interfaces that provide remote function call (RFC) capability.

The persistence/repository layer 610 provides the platform 600 with its own database and data object model. The database and data object model provides a consolidated knowledge base to support multiple enterprise functions, including functions generated as cross-applications. Active communication between the persistence/repository layer 610 and the base systems 516/614 provides a linkage between real time relational data from multiple base systems 516/614 and an integrated enterprise tool to permit strategic enterprise management and planning.

The data object model represents a subset of data objects managed by base systems 516/614. Not all of the data aspects tracked in the base systems 516/614 need to be recorded in the data object model. The data object model has defined relationships with data objects stored in the base systems 516/614. For example, certain data objects in the data object model have "read-only" or "write-only" relationships with data objects in the base systems 516/614. These types of defined relationships are enforced through a communication process between the persistence/ repository layer 610 and the base systems 516/614. The persistence/repository layer 610 decouples application development from the underlying base systems 516/614.

In embodiments, the source systems 516/614 interact with third party applications, such as Lotus software from IBM or data provided by other content providers, such as Yahoo!

As described above, the portal 602 provides a common interface to management services. The management services include a merger project management service and a merger integration project management service. The network 504 links the clients 502 to the portal 602 for exchange of information pertaining to a merger of two organization organizations or an acquisition involving two organizations.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

As used herein, the terms "electronic document" and "document" mean a set of electronic data, including both electronic data stored in a file and electronic data received over a network.

The term "organization" refers to a company, enterprise, business, government, educational institution, or the like. The term "organization" also refers to a group of persons, such as an association or society.

An "enterprise change" or "organization change" refers to a merger, an acquisition, a combination of a merger and acquisition or some other type of change or restructuring in an organization's structure, leadership, governance, personnel, business, direction, purpose, strategy, and so forth.

A "synergy" is a value, performance or effect that is achieved as resources of two organizations combined will be greater than the sum of the separate individual resources. The term "synergy" also refers to cooperative interaction among groups, especially among the acquired subsidiaries or merged parts of an organization, which generates an enhanced combined effect.

The term "object" refers to information sources such as documents, reports, presentations, files and directories.

The processes for merger members can include an intranet template for employees. In general, a "template" is an interface that includes parameters or a format from a previous merger, or is transferred or copied from another employee in the same organization or a customer.

"Stakeholders" are exemplary merger members described herein with an interest or stake in the progress of the merger, or persons who are involved in some aspect of the merger or its effects. Such members can include external merger experts, such as a management consultant or investment banker, or internal merger members and experts, such as an executive board member or a human resource manager.

A "deliverable" is referred to as a "task" that one or more stakeholders are responsible for producing for other stakeholders. A deliverable is referred to as a goal, objective, result or procedure that can be fulfilled, promised, achieved, produced or expected. A deliverable is also referred to as a merger-related project.

Due diligence involves investigation and examination into one or more details of a potential investment, such as an examination of operations and management and a verification of material facts.

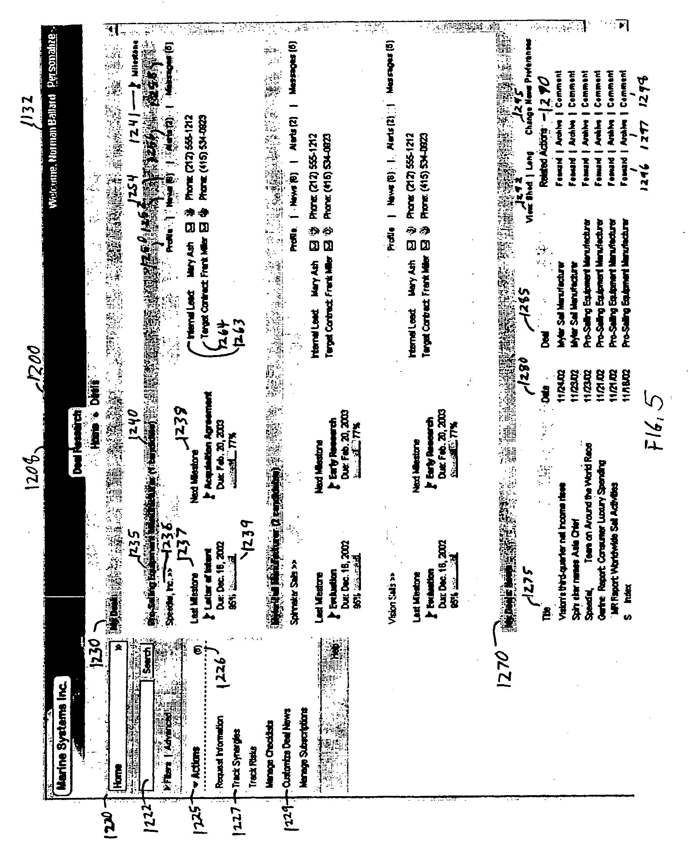

FIG. 5 presents an exemplary interface 1200 for a user 132 involved in deal management. The user 1132 can access a personalized panel 1230 in a deal research menu 1208. The panel 1230 includes a deal topic 1235 and a number of deal candidates 1240 for the topic 1235. The interface 1200 includes an identifier (e.g., icon 241) of merger milestones. The panel 1235 shows a prior milestone 1237 and the next milestone 1238 for an organization 1236. The panel 1235 can show how much of the milestone 1237 has been completed by a bar graph 1239, as well as contact persons 1263, 1264 for the milestones. Furthermore, the panel 1235 allows a user 1132 to access information for the organization 1236 via a profile link 1250, a news link 1252, a merger alert link 1256, and a message link 1258. A number 1254 of news items, messages, and alerts are shown.

Another panel 1270 in the interface 1200 shows news items 1270 that are related to merger deals. The panel 1270 presents a news title summary 1275 and a date 1280 of posting of the news item. The panel 1270 shows if a news item relates to a merger deal 1285 and allows the user 1132 to select related actions 1290, such as forwarding 1296, archiving 1297, and commenting 1298. The user 1132 can view a long or short summary 1292 of news title summaries 1274 and can edit news preferences 1295.

Panel 1220 in the interface 1200 allows the user 1132 to search via a text box 1222 for people or topics and to perform a number 1226 of actions 1225. Some of the actions 1225 in the panel 1220 can include tracking synergies 1227 and customizing deal news 1229.

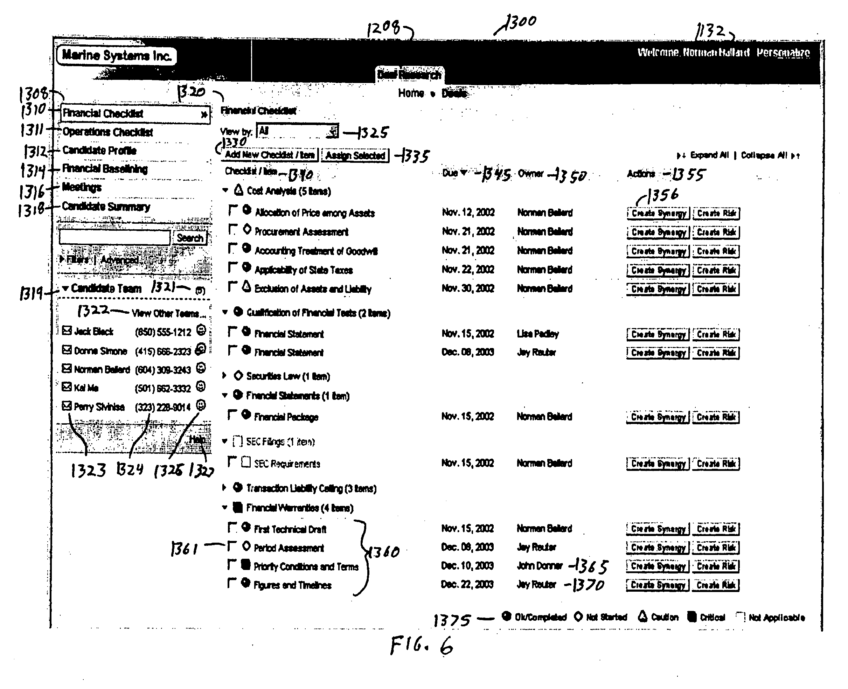

As shown in FIG. 6, stakeholders 1319 conducting deal research 1208 for the merger collaborates on checklist items and financial objectives. FIG. 6 presents an interface 1300 for a financial checklist panel 1320. In this panel 1320, a user 1132 can access one or more checklists 1340 of merger items. The checklists 1340 have items with deadlines 1345, owners 1350, and related actions 1355, such as generating a synergy item 1356.

The checklists 1340 have a sub-checklist 1360 with items of different owners 1365 and 1370. The user 1132 adds a new checklist or a new checklist item 1330 and assign a checklist item 1335 to a new owner 1350. Moreover, the user 1132 can use a checkbox indicator 1361 to notify other stakeholders when the item has been completed or when the item is no longer relevant to the merger. Other indicators (e.g., icon 1375) provides additional status information to merger items.

The interface 1300 can have a panel 1308 to allow the user 1132 to change views in the interface 1300. In addition to accessing the financial checklist view 1320, stakeholders 1319 access other views, such as an operations checklist 1311, a candidate profile 1312, financial baselining 1314, meetings 1316, and a candidate summary 1318. The user 1132 accesses other merger views (not shown) in the panel 1308, such as an overview of the deal, a due diligence checklist, a profile view of a deal, a view of related news items, and a view of deal-related research reports and meetings.

The panel 1308 presents contact information for a number 1321 of stakeholders of a merger team 1319. The panel 1308 presents information to easily allow the user 1132 to send email 1323, place a telephone call 1324, or send a real-time message 1326 to other merger members. Furthermore, the interface 1300 can allow the user 1132 to view other merger teams 1322 and access help or reference information 1327.

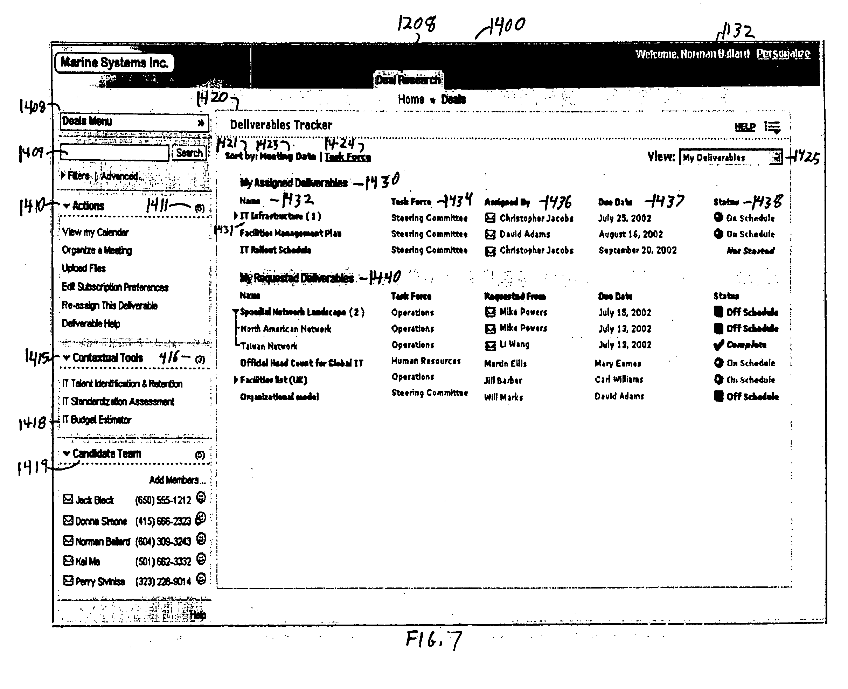

FIG. 7 illustrates an interface 1400 presenting deal research information. The interface 1400 presents a panel 1420 to track merger deliverables. The panel 1420 includes a personalized list of assigned deliverables 1430 and requested deliverables 1440. The deliverables can be sorted 1421 by dates 1423 or by merger groups 1424. The panel 1420 presents a deliverable item 1431 by title 1432, merger team 1434, owner 1436, date 1437, and status 1438. A selector 1425 allows the user 1132 to view deliverables of other merger members and merger teams.

FIG. 7 includes another panel 1408 that provides a number 1411 of other merger actions 1410 and search tools 1409 for merger members 1419. The panel 1408 includes a number 1416 of information technology (IT) specific contextual tools 1415, such as an IT budget estimator. The panel 1408 can allow a user access to one or more interfaces to allow a user to plan, address, manage, and execute merger-related information technology (IT) issues.

The system 10 allows a user to determine strategic benefits and potential risks for merger initiatives (e.g., plans, projections or courses of actions). The system 10 provides initiative portfolio analytics, planning, and reporting to help a user determine how to realign resources to accommodate new initiatives and changes to strategic direction. Furthermore, the system 10 presents configurable workflows to allow a user to discover a return on investment (ROI) and value of each planned initiative.

The system 10 includes an interface for a user to edit information related to one or more stakeholders, in which the interface can include information for initiative management. This can include an initiative portfolio, an initiative plan, or an initiative report.

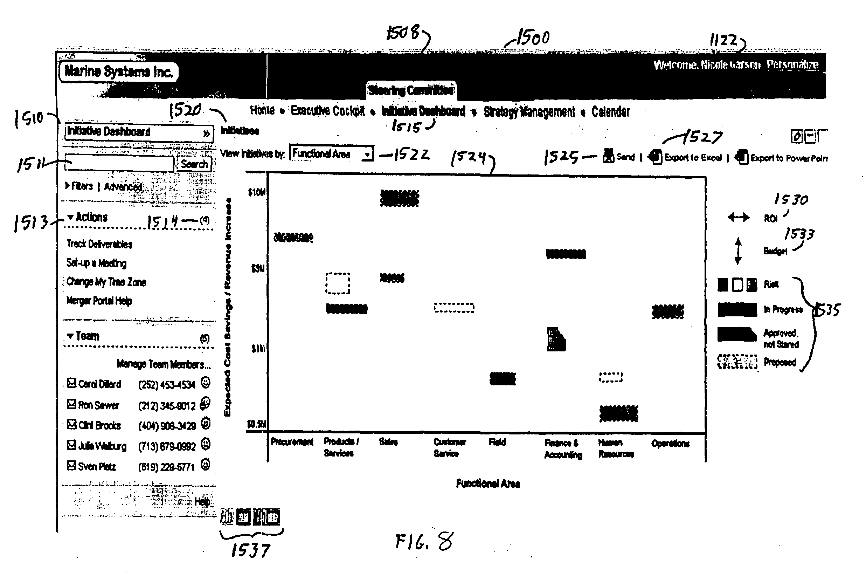

FIG. 8 illustrates an interface 1500 for an initiative dashboard 1515 in a steering committee menu 1508. The initiative panel 1520 allows the user to view a graph 1524 of initiatives. A selector 1522 shows an initiative graph 1524 by functional area, cost savings, revenue increase, or other initiative options. The panel 1520 shows a graph legend 1535 with different types and statuses of merger information. The graph 1524 can present merger financial information for a functional area, such as a return on investment 1530 or a budget 1533.

The user 1122 sends 1525 the initiative information, such as graph 1524, to other stakeholders or transfer the information to an external software object, such as an Excel@ spreadsheet 527 by Microsoft Corporation.

The interface 1500 allows the user to access a chart or graph 1524, a list, or a graph and a list of initiative information via icons 1537. Furthermore, the interface 1500 has a panel 1510 with a text box 1511 to allow the user 1122 to search for items or people, as well as to perform a number 1514 of other actions 1513.

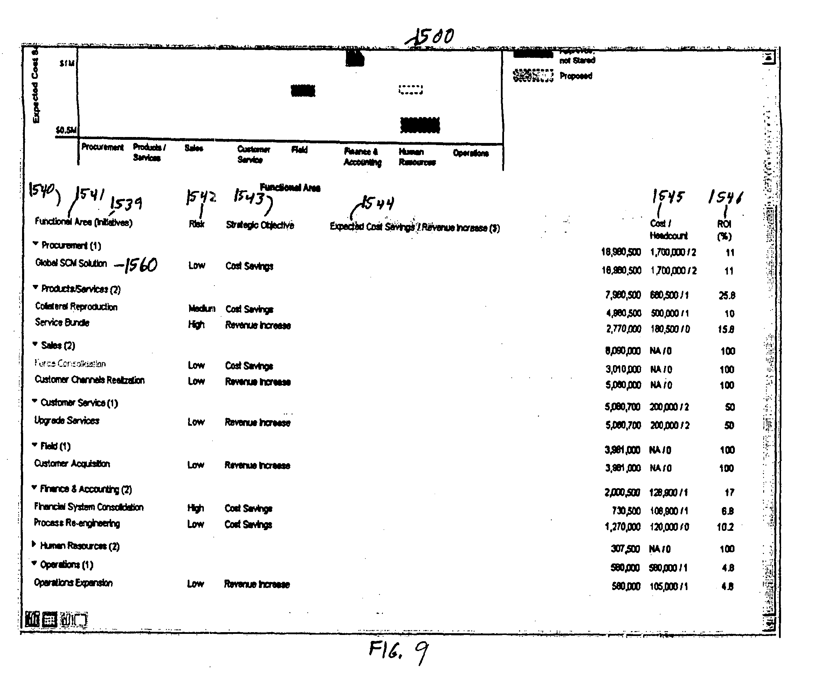

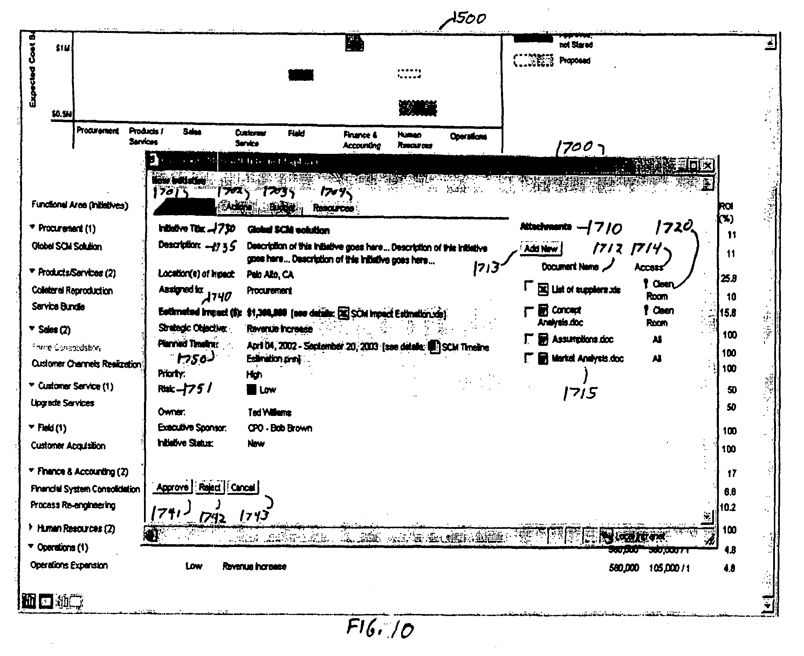

As shown in FIG. 9, the interface 1500 includes a panel 1540 that presents information from the initiative graph 1524 in a list or table format. The panel 1540 presents a functional area 1541 for a number 1539 of initiatives. An initiative risk level 1542, a strategic objective 1543, and an expected cost savings 1544 can be presented. Additionally, a return on investment 1546 and a cost per headcount 1545 can be shown for listed initiatives. The user can select an initiative item 1560 to view another panel, as shown in panel 1700 FIG. 10.

The panel 1700 includes detailed initiative information. The panel 1700 presents tab menus of basic data 1701, actions 1702, budget 1703, and resources 1704. The initiative 1560 in FIG. 10 is presented with a heading 1730 and a detailed description 1735. Additionally, details of an estimated impact 1740 of the merger initiative 1730 are presented, including a planned timeline 1750 and a risk level 1751. After analyzing the initiative information 1701, the user 1122 can approve 1741, reject 1742, or cancel 1743 the initiative 1730.

The user 1122 can view and add 1713 attachments 1710 of objects 1715 to the panel 1700. The panel presents the name 1712 of an object 1715 and a level of access 1714 the user 1122 has to the object 1715.

The panel 1700 also includes a tool to model a "clean room" environment 1720 during the merger process. The clean room concept during a merger typically involves members of the involved organizations physically meeting in a room and exchanging information and objects. Only the members of a clean room environment can view and examine the confidential and privileged information of other merger organizations. If the merger deal is unsuccessful and the merger deal fails, then the clean room members often leave their organization for reasons of conflicts of interest, or are transferred to other parts of their organization where they will not be interacting with the other merger organizations.

The system 10 can generate a "virtual" clean room in which members of an organization share privileged information and objects with other merger organizations. Clean room members are allowed to be easily identified and tracked, as well as notify interface users that an object is associated with a clean room. Consequently, the system 10 allows the organizations to know the members who have exposure to confidential merger material. It also allows clean room members to share objects without traveling to schedule and physically meet other members. Additionally, members can view confidential merger objects at their convenience with a secure user interface.

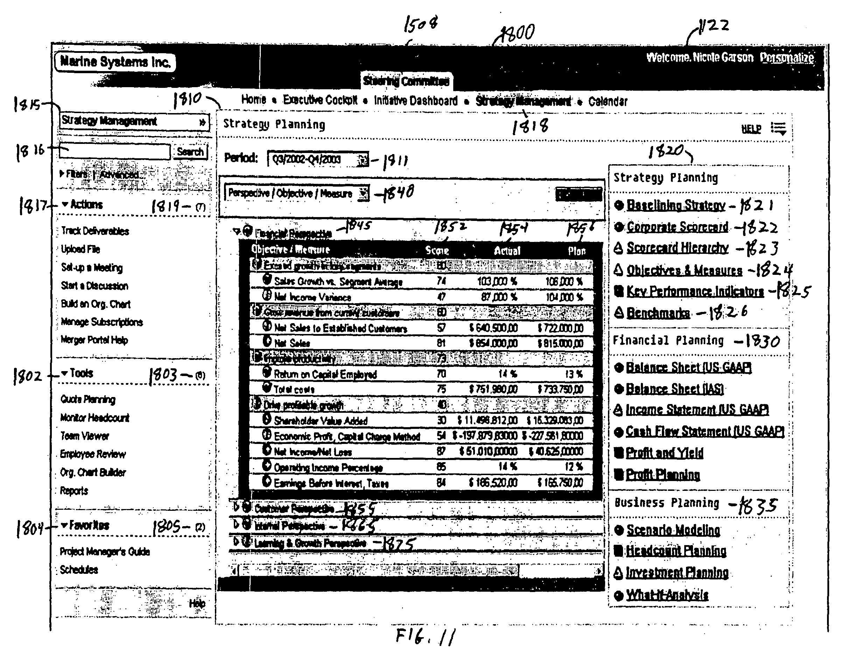

FIG. 11 illustrates an exemplary interface 1800 for strategy management 1818 in the steering committee menu 1508. A first strategy planning panel 1820 allows a user 1122 to access planning actions and objects. The panel 1820 presents a baselining strategy 821, a corporate scorecard 822, a scorecard hierarchy 1823, objectives and measures 1824, key performance indicators 1825, and benchmarks 1826. The interface 1800 includes a financial planning panel to present balance sheets, income statements and profits 1830 and a business planning panel 1835 to present scenario modeling and other planning tools.

In a second strategy planning panel 1810, the user 1122 can select a time period 1811 and a perspective 1840 to view merger strategy. The panel 1810 has a checklist of merger items organized by a financial perspective 1845, a customer perspective 1855, an internal perspective 1865, and a learning and growth perspective 1875. Each perspective exhibits a checklist of item objectives 1850 with a relative score 1852, actual results 1854 and planned results 1856.

The interface 1800 also shows another panel 1815 with a search query field 1816. The interface 1800 allows the user to perform a number 1819 of action items 1817 and use a number 1803 of merger-related tools 802 to facilitate merger workflow between stakeholders. The user 1122 can access a number 1805 of favorite objects 1804.

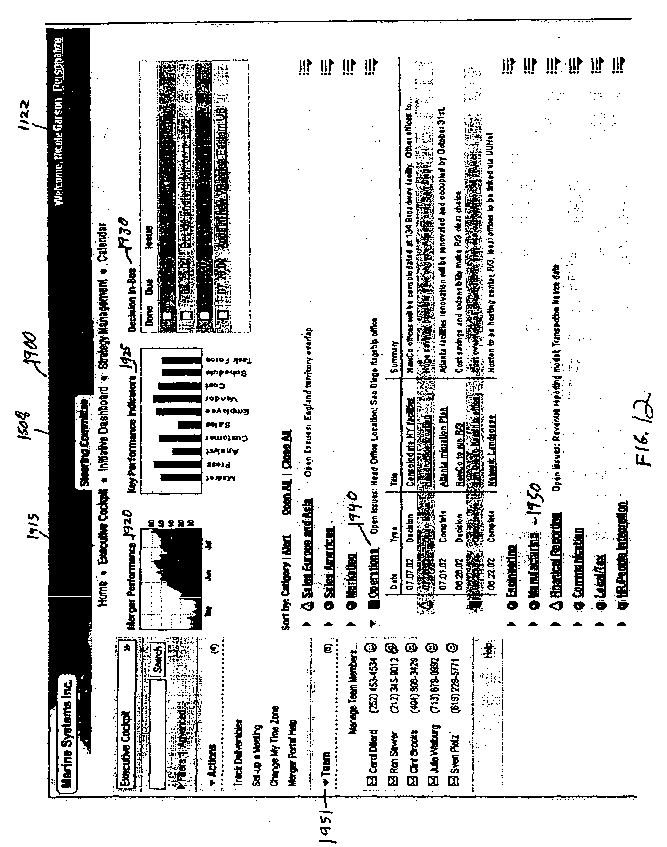

FIG. 12 illustrates an interface 1900 for the stakeholder user 1122 in a merger steering committee. The steering committee has an interface tab 1508 that presents a menu of views, including the presented view of an "executive cockpit" 1915. The executive cockpit 1915 is also referred to as a "Control Center" page or dashboard. The executive cockpit view 1915 allows executive board stakeholders to access, plan, and manage various aspects of the merger. The interface 1900 charts the merger performance 1920 and present key performance indicators 1925. The interface 1900 presents merger issues in a decision box 1930. Merger issues can also be presented by type, category or priority. For example, the stakeholder user 1122 can view issues by category in a manufacturing division 950 or in an operations department 1940. The interface 1900 allows the stakeholder user 1122 to contact and manage other stakeholders 1951.

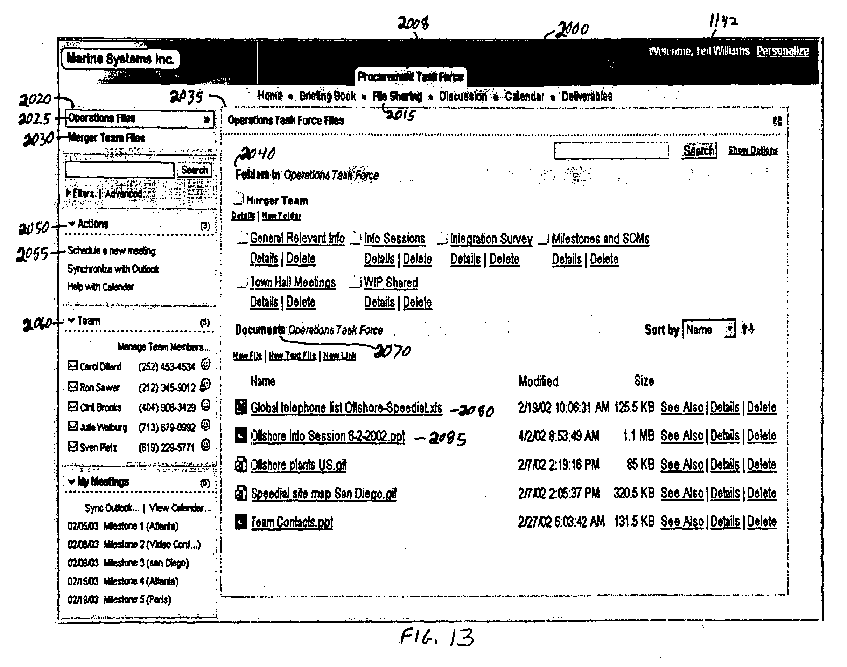

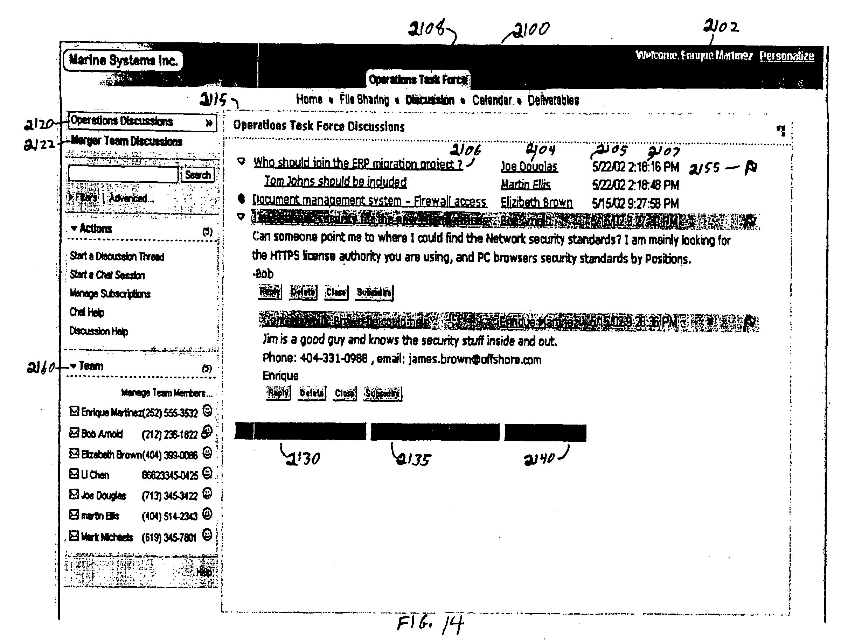

FIG. 13 illustrates an interface 2000 that allows stakeholders from various groups to collaborate and share information during the merger. In particular, FIG. 14 shows interface 2000 for a stakeholder user 1142 in the procurement task force. The procurement task force tab 2008 presents the stakeholder user 1142 with a menu of views, including a view 2015 for sharing objects with stakeholders in the procurement task force. The interface 2000 facilitates collaboration in presenting a view 2035 for the procurement task force stakeholders to share folders 2040 and documents 2070 with stakeholders in the operations task force.

The shared objects are objects that are internal or external to system 10, but can coexist with the disclosed software. Examples of these externally-generated objects include an Excel@ spreadsheet 2080 or a PowerPoint® presentation 2085. The external objects 2080 and 2085 are generated by software made by Microsoft Corporation.

The stakeholder 1142 in the procurement task force also can share objects with stakeholders in a merger team 2030. Additionally, the stakeholder user 1142 views and accesses other procurement task force team members 2060 and initiate merger actions 2050, such as scheduling a new meeting 2055.

FIG. 14 illustrates an interface 2100 with a panel 2115 for group discussions. The interface user 2102 accesses a merger issue 2106 posted by a member 2104 of a team 2160. The interface 2100 shows the time 2107 and date 2105 of the posting of the issue 2106. An indicator 2155 signifies that the issue 2106 should be resolved quickly. The team member 2102 begins a new discussion topic 2130, subscribe to a discussion 2135, or delete a discussion 2140 from the panel 2115.

The interface 2100 also facilitates collaborative discussions between members of different merger groups. For example, the user interface 2100 can be accessed by members from a merger team 2122, as well as members of the operations task force team 2120.

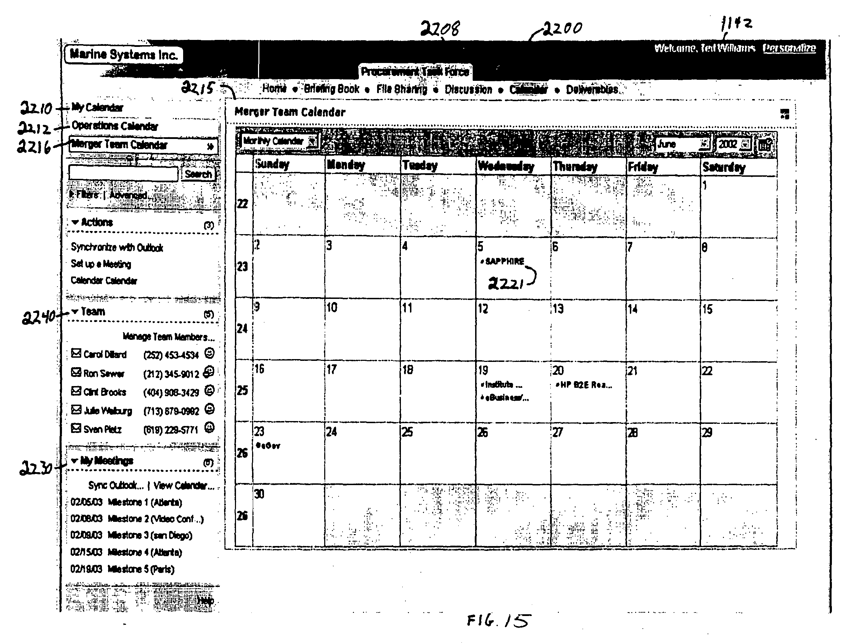

FIG. 15 shows an example of a collaborative calendar interface 2200 for a group 2240 in the merger. The collaborative calendar interface 2200 has an event 2221 that can be scheduled by user 1142 or a member of a group 2240. The user 1142 can collaborate with a calendar 2212 of another merger group. The user 1142 can access a personal calendar 2210 to incorporate all of the events from each calendar in which the user 1142 can have access. The personal calendar (not shown) can store and present personal user events and meetings 2230.

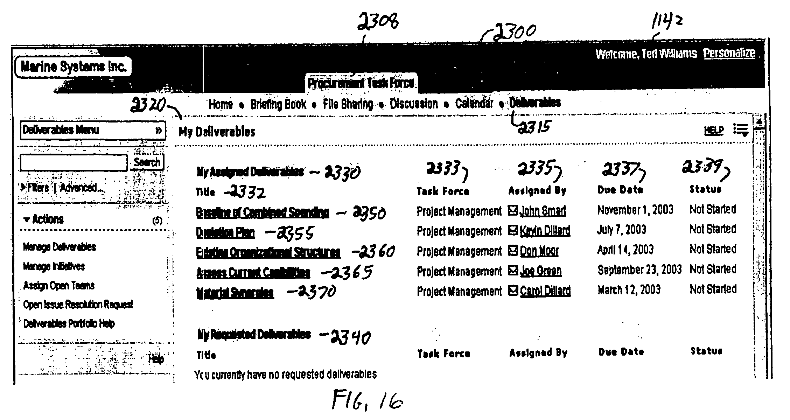

FIG. 16 shows an interface 2300 with a procurement task force tab 2308 that has a menu of views including a deliverables view 2315. The interface 2300 tracks deliverables and can include a panel 2320 with a list of personalized assigned deliverables 2330 and a list of requested deliverables 2340. Some deliverable topics 2332 includes a baseline of combined spending 2350, a depletion plan 2355, an organizational structure 2360, a view of current capabilities 2365, and a view of material synergies 2370. In addition to presenting deliverable topics 2332, the panel 2320 can present a targeted merger task force 2333, an initiating deliverable contact person 2335, a deadline 2337, and a status 2339. A user 1142 can select a deliverable, such as material synergies 2370, to access another view of deliverable information.

A merger synergy realization scenario can help an organization achieve business goals and assist customers during the merger process.

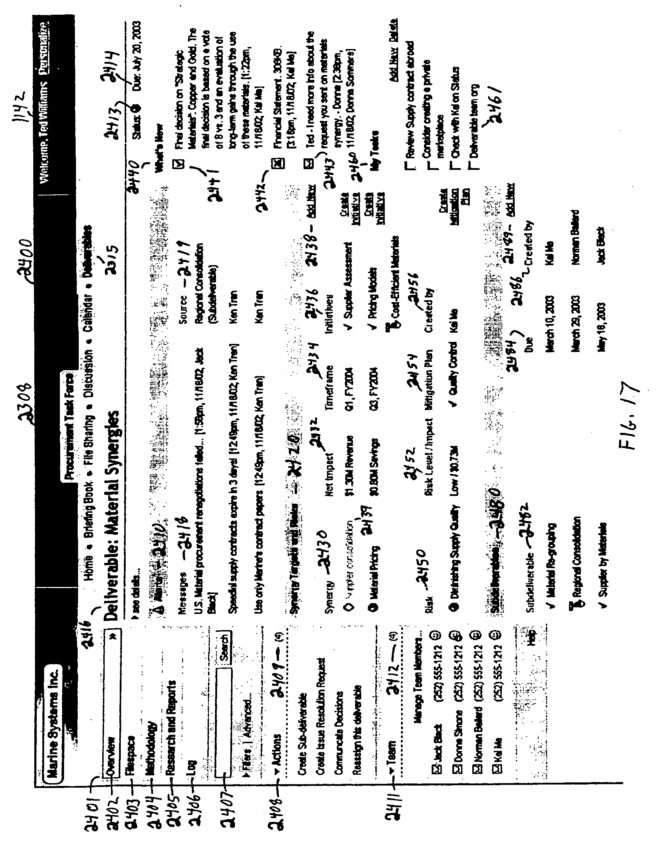

FIG. 17 shows an interface 2400 with a procurement task force tab 2308 that has a menu of views including a deliverables view 2315. The user 1142 views a synergies panel 2416 with an alerts section 2410, a synergy targets and risks section 2420, and a sub-deliverables section 2480. In the alert section 2410, the user 1142 inspects merger-related messages 2418, along with a message source 2419. The user 1142 views a net financial impact 2432 of a synergy 2430 supporting an initiative 2436 in a given time frame 2434. The user 1142 also evaluates a risk level impact 2452 of a merger risk 2450 from a plan 2454 generated by a stakeholder listed in column 2456. The sub-deliverables section 2480, presents a group of sub-deliverables 2482 with corresponding deadlines 1484 and owners 2486. The interface 2400 allows a user 1142 to consolidate suppliers 2439. The user 1142 can add other synergies and risks 2420 and sub-deliverables 2480 to the panel 2416 via links 2438, 2489.

The interface 2400 also presents a general status indicator 2413 and a due date 2414. Recent news, emails 2443, checklists 2441, and objects 2442 are also shown in another panel 2440. Additionally, a panel 2460 shows one or more personalized tasks 2461.

Another panel 2401 in the interface 2400 presents the user 1142 with access to several other views, including a file space view 2403, a methodology view 2404, a view of research and reports 2405, and a view of a merger log 2406. The panel 2401 includes a link (not shown) to access human resource-related synergy tools. The panel 2401 also has search capabilities 2407 and links to a number 2409 of actions 2408. Moreover, the user 1142 can contact a number 2412 of other team members 2411.

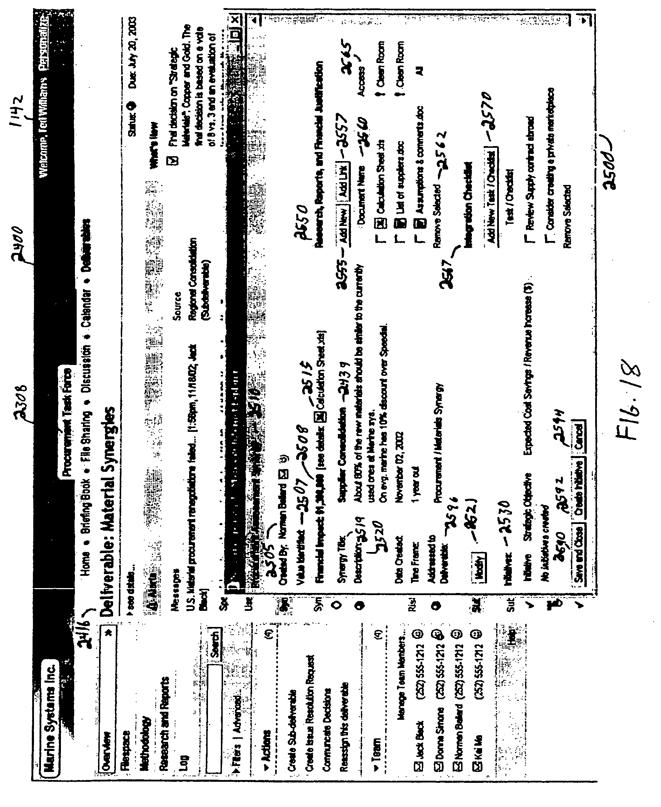

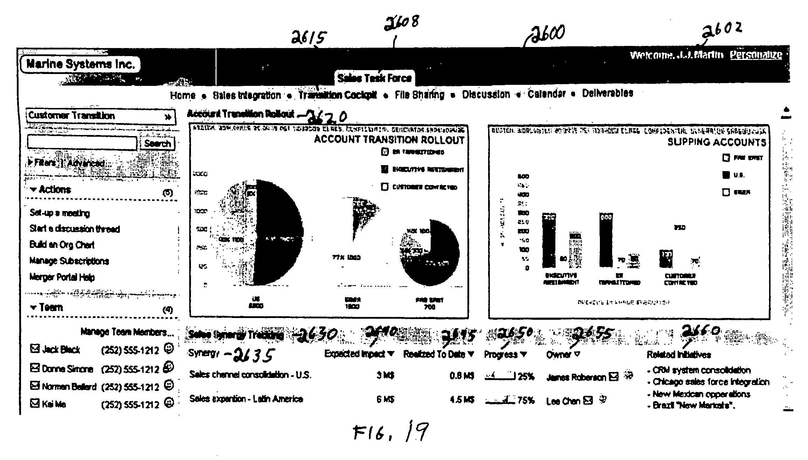

The user 1142 selects a synergy item 2430, such as supplier consolidation 2439, to access another interface 2500 in FIG. 19 of detailed synergy information. FIG. 18 shows interface 2500 for a synergy category 2510 and synergy 2439 generated by a stakeholder 2505. The interface 2500 shows an identified value 2507 from a synergy 2510, such as a financial impact 2508 and any related attachments 2515. The identified value 2507 is identified by a stakeholder. The identified value 2507 shows a particular synergy title 2519 and a description summary 2520. The user 1142 can modify the identified value 2507 via button 2521 and generate merger-related initiatives 2530.

The interface 2500 also includes a list of objects 2550 that justifies the synergy 2510 with research, reports, and financial information. The user 1142 adds an object or a link to the list 2550 via buttons 2555 and 2557, or even remove 2562 a listed item via link 2562. The list 2550 can identify a particular level of user access 2565 to an object. The access level 2565 can include a clean room level of access.

The interface 2500 can allow the user 1142 to properly checklist integration issues 2567. The user 1142 adds tasks via button 2570 to ensure proper integration of the synergy 2439. The user 1142 can also generate a new initiative via button 2592, cancel the synergy via button 2594, or save synergy information and close the interface 2500 via button 2590.

FIG. 19 shows an example interface 2600 for a stakeholder user 2602 with access to a sales task force menu 2608. Other possible views for stakeholders in the sales task force interface 2600 include views for sales integration, file sharing, discussions, deliverables, and a calendar. The view presented in interface 2600 is a transition cockpit view 2615.

The view 2615 allows the stakeholder user 2602 to access and manage sales-related transition tools for the merger, including an account transition rollout 2620 and sales synergy tracking 2630. The account transition rollout 2620 shows pie charts and graphs of regional account information and accounts that are slipping from schedule. The interface 2600 also includes other lists, tables, charts, and graphs of synergy information.

The stakeholder user 2602 inspects a list of sales-related synergies 2635, along with an expected financial impact 2640. The synergy list 2635 shows a measure of the progress of synergies 2650 and a real-time financial impact estimation 2645. The synergy list 2635 presents related synergy owners 2655 and related initiatives 2660.

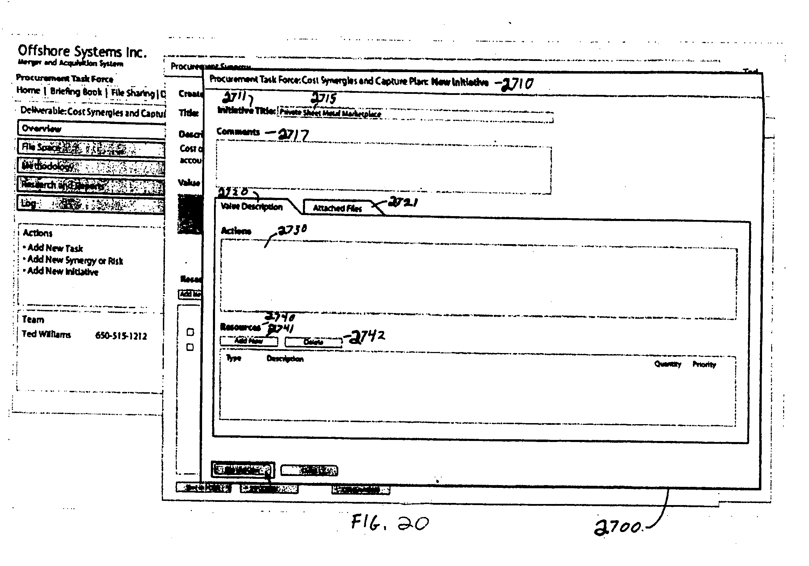

FIG. 20 shows an interface 2700 for adding a new initiative 2710 for a synergy in a merger task force. The interface 2700 has a field 2715 for an initiative title 2711 and a field 2717 for comments. The interface 2700 includes a tabbed panel 2720 for a value description and another tabbed panel 2721 for any attached files. One or more actions 2730 are entered into a user action field 2730. Moreover, one or more merger-related resources 2740 are added or deleted from the initiative 2710 via buttons 2741, 2742.

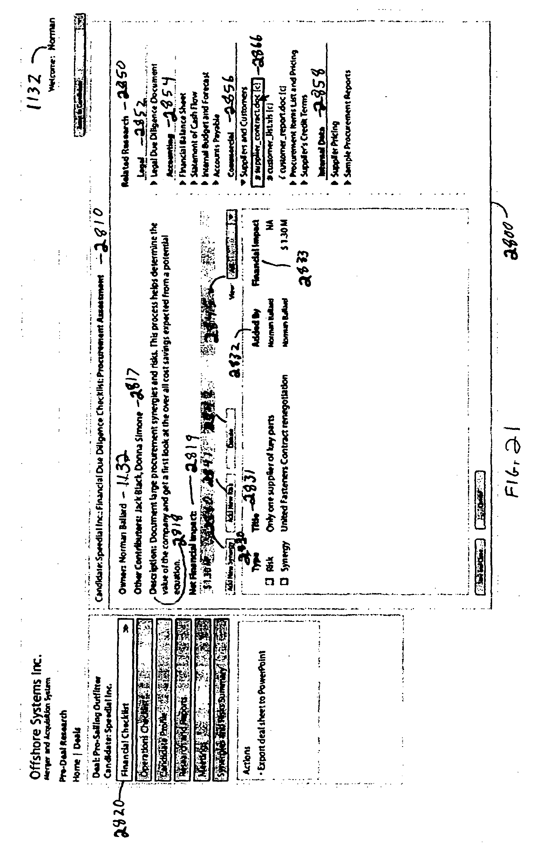

FIG. 21 shows an interface 2800 with a financial checklist 2820 and checklist item 2810. The interface 2800 can be presented during the deal management 1125. A user 1132 can add a synergy or a risk to the financial checklist 2820 via buttons 2840, 2841. The user 1132 can delete an item from the checklist 2820 via button 2842. Along with detailed description 2818 of a checklist item 2810, the interface 2800 can present the name of an owner 1132 and other contributors 2817 for the item 2810. The interface 2800 allows user 1132 to view 2845 all of the entered risks and synergies by type 2830, title 2831, owner 2832, and financial impact 2833. The interface 2800 can present related research 2850 with one or more lists of legal 2852, accounting 2854, commercial 2856, and internal data 2858.

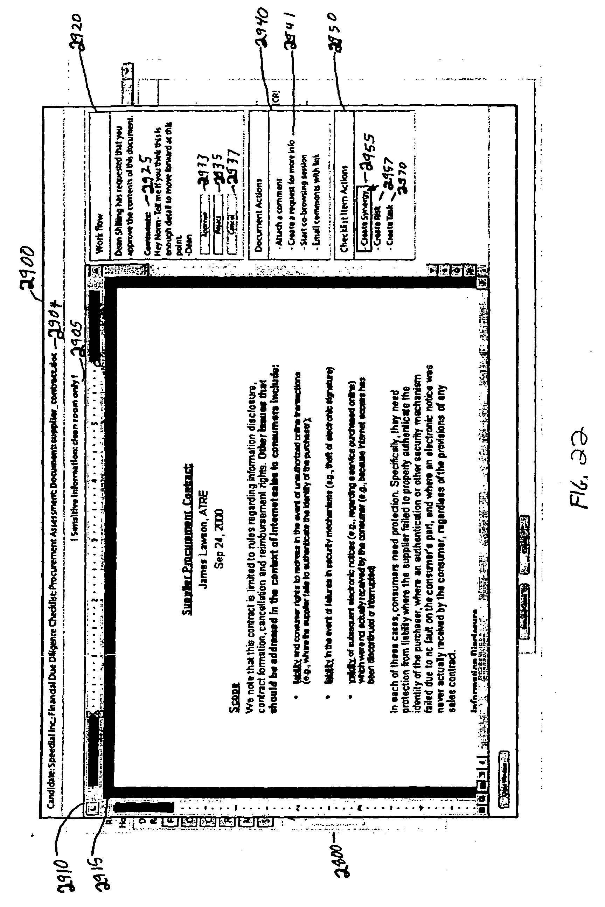

FIG. 22 presents an interface 2900 with a panel 2910 for an object (e.g., a document) 3915 in a merger checklist 3904. The interface 3900 is presented when a supplier contract document 2866 is selected from interface 2800. The interface 2900 identifies that the object 2915 includes sensitive information for a clean room participant 2905. The interface 2900 can include a panel 2920 to facilitate merger workflow between stakeholders. The panel 2920 allows a user to easily approve, reject, or cancel a request via buttons 2933, 2935, 2937. The panel 2920 can include comments 2925 from a stakeholder.

The interface 2900 can include a panel 2940 for one or more document actions, such as generating a request 2941. Furthermore, the interface 2900 includes a checklist item actions panel 2950 to allow the user to generate a synergy 2955, a risk 2957, or a task 2970.

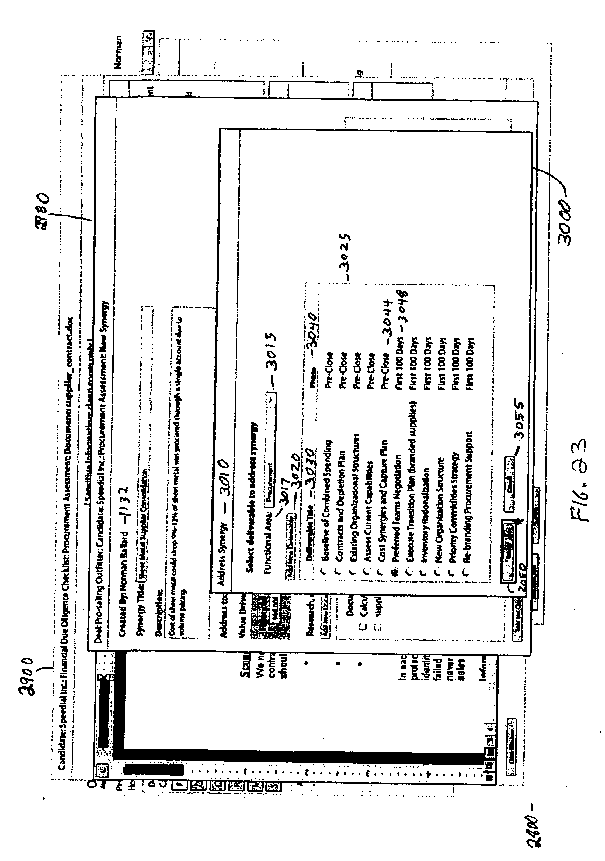

FIG. 23 presents several synergy interfaces. A user can select the generate synergy link 2955 in a panel 2950 in FIG. 22 to access a new synergy interface 2980 in FIG. 23. The new synergy interface 2980 is similar to the synergy interface 2500 as shown as deliverable in FIG. 18. If the user 1132 decides to address a deliverable 3015 to a synergy target 3010, as shown 2596 in FIG. 18, then a new interface 3000 can be presented. The interface 3000 allows the user 1132 to select a functional area 3017 for the synergy via pull down menu field 3015. The user 1132 can add a new deliverable to a list 3025 of deliverables via button 3020. The list 3025 presents a deliverable title 3030 and a merger phase 3040 for the deliverable, such as a pre-close phase 3044 or a phase 3048 in the first on hundred days of the merger. The interface 3000 allows the user 1132 to submit or cancel the new address synergy 3010 via buttons 3050, 3055.

According to an aspect of the invention, there is provided a system for implementing a merger of at least two organizations including an interface for a user to edit information related to one or more stakeholders of at least one of the organizations, the interface including information for initiative management, the system including at least one of an initiative portfolio, an initiative plan, and an initiative report.

In embodiments, the interface can include information for a financial impact, an indicator of a priority level for an issue, a scale of measurement for initiative completion, and a selector for approval of one or more initiatives.

In another aspect, the invention features a system for planning a merger of at least two organizations including at least one of an organizational strategy tool, a strategy management tool, a strategy risk management tool, a strategy portfolio management tool, a strategy planning tool, and one or more software tools presenting a user with at least one of a personalized object, a preferred object, a recently accessed object, and a merger-related object.

In embodiments, the system can include an interface to present a strategic fit, a cultural fit and a financial fit of one or more deal candidates, wherein the organizational strategy tool can include an interface for communicating with one or more stakeholders.

In another aspect, the invention features a system including a module for planning a merger of at least two organizations, the module including at least one of a strategy planner tool, a deal management tool, and an initiative management tool, the module further including a help or reference indicator in an interface for a merger of one or more organizations, and at least one of a risk management tool, an analysis management tool, and a portfolio management tool.

In embodiments, the system includes a template adapted for at least one of the organizations, the template including a reference model, the system further including a presentation of a planning time period.

In another aspect, the invention features a system for planning a merger of at least two organizations, the system including a module for managing one or more merger milestones, the module including an interface presenting a measure of completion for one or more milestones.

In embodiments, the module can include an interface presenting past, current, and future milestones, and at least one or more interfaces presenting at least one of a profile, a news message, a merger alert message, and a message from a stakeholder, the one or more interfaces further presenting news archiving, news forwarding, and news commenting.

In another aspect, the invention features a system for planning a merger of at least two organizations, the system including one or more user interfaces for managing one or more deliverables related to the merger, the one or more user interfaces further including a user interface to track deliverables, a list of assigned deliverables, and a list of requested deliverables.

In embodiments, the one or more user interfaces present at least one of a deliverable item title, a merger team, a deliverable owner, a deliverable date, and a deliverable status.

In another aspect, the invention features a system for implementing a merger of at least two organizations, the system including a module for managing the merger, the module including at least one of a candidate assessment tool, a due diligence object management tool, and an object tracking interface.

In embodiments, the object tracking interface can include a link to an organizational strategy.

In another aspect, the invention features a method for planning a merger of at least two organizations including notifying an interface user that an object can be associated with a clean room.

In embodiments, the object can be an electronically stored document.

In another aspect, the invention features a system for planning a merger of at least two organizations, the system including one or more interfaces presenting at least one of merger financial information, an initiative risk, an initiative description, a strategic objective, and an interface for one or more user actions.

In embodiments, the merger financial information can include at least one of a budget, a return on investment, a cost savings, an estimated impact, an actual impact, and financial resources. The one or more user actions can include an approval action, a rejection action, a cancellation action, and a storing action.

In another aspect, the invention features a method including providing deal information for a member of a first group related to a merger of at least two organizations, and ensuring accurate deal information transfer to a member of a second group related to the merger of the organizations.

In embodiments, the method can include reducing an information loss from a pre-merger of the organizations to a post-merger of the organizations.

In another aspect, the invention features a system for planning a merger of at least two organizations, the system including at least one interface presenting at least one of a financial checklist, an operations checklist, a candidate profile, a merger-related meeting, a candidate summary, an overview of a merger deal, a due diligence checklist, a profile of a merger deal, a merger-related news item, and a merger-related research report. In embodiments, the system can include a panel to allow a user to access one or more interfaces to plan, address, manage, and execute merger-related information technology issues. The invention is concerned with systems and techniques relating to software for enterprise change, in particular to merger and acquisition processes and tools for one or more organizations. A system for planning a merger of at least two organizations includes at least one of an organizational strategy tool, a strategy management tool, a strategy risk management tool, a strategy portfolio management tool, a strategy planning tool, and one or more software tools presenting a user with at least one of a personalized object, a preferred object, a recently accessed object, and a merger-related object.

Other embodiments can be within the scope of the following claims.

## Claims

1. A system for implementing a merger of at least two organizations comprising: an interface for a user to edit information related to one or more stakeholders of at least one of the organizations, the interface comprising information for initiative management, the system comprising at least one of an initiative portfolio, an initiative plan, and an initiative report.

2. A system according to claim 1, for planning a merger of at least two organizations, the system comprising at least one of an organizational strategy tool, a strategy management tool, a strategy risk management tool, a strategy portfolio management tool, a strategy planning tool, and one or more software tools presenting a user with at least one of a personalized object, a preferred object, a recently accessed object, and a merger-related object.

3. A system according to claim 2, wherein the organizational strategy tool comprises an interface for communicating with one or more stakeholders to present a strategic fit, a cultural fit and a financial fit of one or more deal candidates.

4. A system according to claim 2, comprising a module for planning a merger of at least two organizations, the module comprising at least one of a strategy planner tool, a deal management tool, and an initiative management tool, the module further comprising a help or reference indicator in an interface for a merger of one or more organizations, and at least one of a risk management tool, an analysis management tool, and a portfolio management tool.

5. A system according to claim 2, comprising a module for managing one or more merger milestones, the module including an interface presenting a measure of completion for one or more milestones.

6. A system according to claim 2, comprising one or more user interfaces for managing one or more deliverables related to the merger, the one or more user interfaces further comprising a user interface to track deliverables, a list of assigned deliverables, and a list of requested deliverables.

7. A system according to claim 1, comprising a module for managing the merger, the module comprising at least one of a candidate assessment tool, a due diligence object management tool, and an object tracking interface.

8. A system according to claim 7, wherein the object tracking interface comprises a link to an organizational strategy.

9. A system according to claim 2, comprising one or more interfaces presenting at least one of merger financial information, an initiative risk, an initiative description, a strategic objective, and an interface for one or more user actions.

10. A system according to claim 2, wherein one or more user actions comprise an approval action, a rejection action, a cancellation action, and a storing action.

11. A method of implementing a merger of at least two organizations comprising: providing an interface for a user to edit information related to one or more stakeholders of at least one of the organizations, providing the interface with information for initiative management, the method comprising providing at least one of an initiative portfolio, an initiative plan, and an initiative report.

12. A method according to claim 11, of planning a merger of at least two organizations, the method comprising: providing at least one of an organizational strategy tool, a strategy management tool, a strategy risk management tool, a strategy portfolio management tool, a strategy planning tool, and one or more software tools presenting a user with at least one of a personalized object, a preferred object, a recently accessed object, and a merger-related object.

13. A method according to claim 12, comprising providing a module for planning a merger of at least two organizations, the module being provided to comprise at least one of a strategy planner tool, a deal management tool, and an initiative management tool, the module further being provided to comprise a help or reference indicator in an interface for a merger of one or more organizations, and at least one of a risk management tool, an analysis management tool, and a portfolio management tool.

14. A method according to claim 12, comprising providing a module for managing one or more merger milestones, the module including an interface presenting a measure of completion for one or more milestones.

15. A method according to claim 12, comprising providing one or more user interfaces for managing one or more deliverables related to the merger, the one or more user interfaces further comprising a user interface to track deliverables, a list of assigned deliverables, and a list of requested deliverables.

16. A method according to claim 11, comprising providing a module for managing the merger, the module comprising at least one of a candidate assessment tool, a due diligence object management tool, and an object tracking interface.

17. A method according to claim 16, wherein the object tracking interface is provided to comprise a link to an organizational strategy.

18. A method according to claim 12, comprising providing one or more interfaces presenting at least one of merger financial information, an initiative risk, an initiative description, a strategic objective, and an interface for one or more user actions.

19. A method according to claim 12, wherein one or more user actions comprise an approval action, a rejection action, a cancellation action, and a storing action.

20. A user terminal comprising means operable to perform the method of any of claims 11 to 19.

21. A program storage device readable by a processing apparatus, the device embodying a program of instructions executable by the processor to perform the steps of any one of claims 11 to 19.
